# EUROPEAN PATENT SPECIFICATION

(11) **EP 3 085 580 B1**
(45) Date of publication and mention of the grant of the patent: **05.06.2019**
(21) Application number: 16165841.4
(22) Date of filing: 18.04.2016
(51) Int. Cl.: B60P 3/20, B60H 1/32, F01M 1/16, F01M 1/12, F01M 5/02

(54) **SYSTEMS FOR PREVENTING ENGINE BEARING DAMAGE**
SYSTEME ZUR VERHINDERUNG VON MOTORLAGERBESCHÄDIGUNG
SYSTÈMES POUR EMPÊCHER L'ENDOMMAGEMENT D'UN MOTEUR

(30) Priority: 22.04.2015 US 201562150982 P; 07.04.2016 US 201615092664
(43) Date of publication of application: 26.10.2016
(73) Proprietor: Carrier Corporation, Farmington, CT 06034-4015 (US)
(72) Inventor: CONWAY, Richard, Athens, GA 30601 (US); BROADDUS, Michael, Athens, GA 30601 (US)
(74) Representative: Dehns

(56) References cited:
- EP-A2- 0 482 921
- JP-A- 2014 105 665
- JP-U- H0 317 209
- US-A1- 2013 158 835
- US-B1- 6 349 692

## Description

The subject matter disclosed herein generally relates to engine bearings and, more particularly, to systems for protecting engine bearings from vibration damage.

A typical refrigerated cargo truck or refrigerated truck trailer, such as those utilized to transport a cargo via sea, rail, or road, is a truck or trailer having a cargo compartment modified to include a refrigeration unit located at one end of the truck or trailer. Refrigeration units typically include a compressor, a condenser, an expansion valve, and an evaporator serially connected by refrigerant lines in a closed refrigerant circuit in accord with known refrigerant vapor compression cycles. A power unit, such as an engine, drives the compressor of the refrigeration unit, and may be diesel powered, natural gas powered, or other type of engine. In many truck/trailer transport refrigeration systems, the compressor is driven by the engine shaft either through a belt drive or by a mechanical shaft-to-shaft link. Such a refrigeration unit is known from for example EP 0 482 921 A.

In other systems, the engine drives a generator that generates electrical power, which in turn drives the compressor.

Manufacturers and operators of fleets of refrigerated trucks and refrigerated tractor trailers desire to maximize operational efficiency of not only the refrigeration unit, but of the truck or tractor trailer system as a whole. One area of improvement may be made with respect to engine performance and maintenance, and particularly to maintenance and protection of bearings within the engine. The refrigeration unit may include an engine and system for powering the refrigeration unit.

Viewed from a first aspect, the present invention provides a system for protecting a refrigeration engine of a refrigeration unit from damage due to vibration while the refrigeration engine is not operating, the system being arranged to: operate the refrigeration unit in a first, electric, mode wherein electrical power is supplied to the refrigeration unit and the refrigeration engine is not running; and operate the refrigeration unit in a second, combustion, mode wherein the refrigeration engine is running in order to power the refrigeration unit; the system comprising: the refrigeration engine, which comprises a crankshaft, at least one piston, at least one bearing, a lubricating fluid source, and a fluid pump associated therewith; and a controller operationally connected to and configured to control the fluid pump, characterized in that, when the system is in the first, electric, mode, the controller is configured to control the fluid pump in a duty cycle to maintain a predetermined minimum fluid pressure of the lubricating fluid such that a lubricating fluid film is present between the at least one bearing and the crankshaft while the refrigeration engine is not operating

In addition to one or more of the features described above, or as an alternative, further embodiments may include a starter operationally connected to the crankshaft and the fluid pump. The starter configured to supply power to and operate the fluid pump, and the controller is configured to operate the starter when the system is in the first mode to operate the fluid pump and maintain the lubricating fluid film while the refrigeration engine is not operating.

In addition to one or more of the features described above, or as an alternative, further embodiments may include that the fluid pump is an auxiliary pump, the refrigeration engine further comprising a lubricating fluid pump.

In addition to one or more of the features described above, or as an alternative, further embodiments may include that the auxiliary pump is fluidly isolated from the at least one bearing when the system is in the second mode.

In addition to one or more of the features described above, or as an alternative, further embodiments may include that the auxiliary pump is fluidly connected to the at least one bearing when the system is in the first mode.

In addition to one or more of the features described above, or as an alternative, further embodiments may include that the auxiliary pump is configured to be powered by an electric power source.

In addition to one or more of the features described above, or as an alternative, further embodiments may include that the controller is configured to control the auxiliary pump to operate in the duty cycle to maintain the lubricating fluid film while the engine is not operating.

In addition to one or more of the features described above, or as an alternative, further embodiments may include that the controller is configured to determine at least one characteristic of the duty cycle of the fluid pump based on at least one of an engine mode, a damaging vibration, an engine design, a fluid pump design, a type of lubricating fluid, a quality of lubricating fluid, a temperature, and a fluid pressure.

In addition to one or more of the features described above, or as an alternative, further embodiments may include that the refrigeration engine is an internal combustion engine of the refrigeration unit.

In addition to one or more of the features described above, or as an alternative, further embodiments may include that the controller is configured to provide the lubricating fluid to one or more additional components of the refrigeration engine when in the first mode.

Viewed from a second aspect, the invention provides a method of protecting a refrigeration engine of a refrigeration unit from vibration damage using a system arranged to: operate the refrigeration unit in a first, electric, mode wherein electrical power is supplied to the refrigeration unit and the refrigeration engine is not running; and operate the refrigeration unit in a second, combustion, mode wherein the refrigeration engine is running in order to power the refrigeration unit; the refrigeration engine having at least one bearing and a crankshaft, the method comprising: determining that the system is operating in the first mode; and operating, in the first mode, a fluid pump in a duty cycle to maintain a bearing lubrication fluid film between the at least one bearing and the crankshaft while the refrigeration engine is not operating.

In addition to one or more of the features described above, or as an alternative, further embodiments may include that the refrigeration engine includes a starter, the method further includes controlling the starter to operate the fluid pump during the duty cycle.

In addition to one or more of the features described above, or as an alternative, further embodiments may include that the fluid pump is an auxiliary pump and the refrigeration engine further comprises a lubricating fluid pump.

In addition to one or more of the features described above, or as an alternative, further embodiments may include the method as performed by the refrigeration unit.

Technical effects of at least some of the preferred embodiments of the invention include providing a controlled fluid pump configured to maintain a minimum predetermined fluid pressure within a system to prevent bearings contacting a crankshaft. Further effects include a control system configured to protect bearings from vibrational damage.

The subject matter which is regarded as the invention is particularly pointed out and distinctly claimed in the claims at the conclusion of the specification. The foregoing and other features and advantages of the invention are apparent from the following detailed description of an example embodiment taken in conjunction with the accompanying drawings in which:
FIG. 1A is a schematic view of a tractor trailer system having a refrigeration unit and a cargo compartment;
FIG. 1B is a schematic view of a refrigeration unit for a cargo compartment of the tractor trailer system of FIG. 1A;
FIG. 2 is a schematic illustration of a system for protecting bearings of a refrigeration engine;
FIG. 3 is a schematic illustration of another system for protecting bearings of a refrigeration engine; and
FIG. 4 shows a process for controlling a system for protecting bearings of a refrigerated engine.

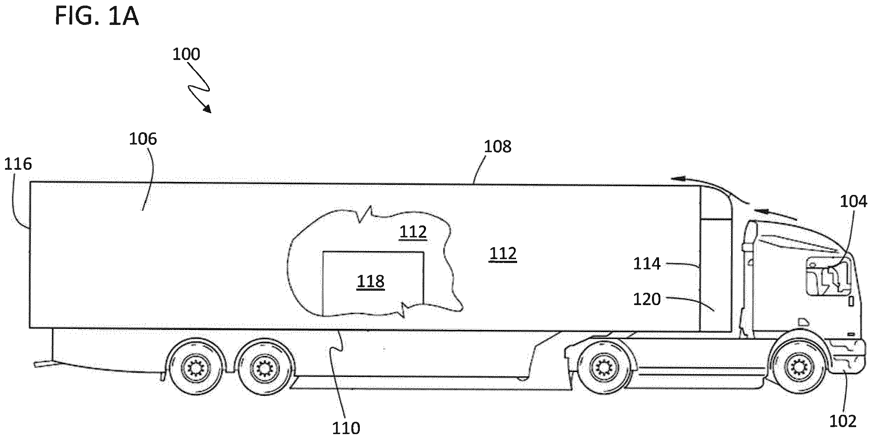

Shown in FIG. 1A is a schematic of a tractor trailer system 100. The tractor trailer system 100 includes a tractor 102 including an operator's compartment or cab 104 and also including an engine, which acts as the drive system of the tractor trailer system 100. A trailer 106 is coupled to the tractor 102. The trailer 106 is a refrigerated trailer 106 and includes a top wall 108, a directly opposed bottom wall 110, opposed side walls 112, and a front wall 114, with the front wall 114 being closest to the tractor 102. The trailer 106 further includes a door or doors (not shown) at a rear wall 116, opposite the front wall 114. The walls of the trailer 106 define a cargo compartment. The trailer 106 is configured to maintain a cargo 118 located inside the cargo compartment at a selected temperature through the use of a refrigeration unit 120 located on or next to the trailer 106. The refrigeration unit 120, as shown in FIG. 1A, is located at or attached to the front wall 114.

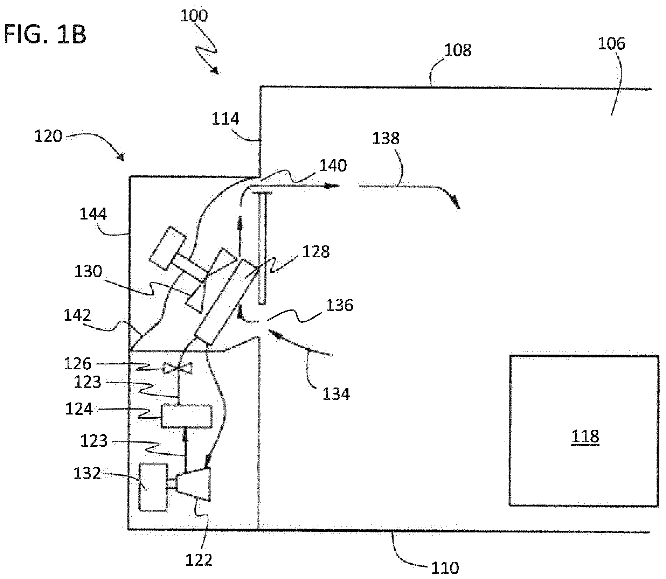

Referring now to FIG. 1B, the refrigeration unit 120 is shown in more detail. The refrigeration unit 120 includes a compressor 122, a condenser 124, an expansion valve 126, an evaporator 128, and an evaporator fan 130. The compressor 122 is operably connected to a refrigeration engine 132 which drives the compressor 122. The refrigeration engine 132 is connected to the compressor in one of several ways, such as a direct shaft drive, a belt drive, one or more clutches, and/or via an electrical generator. A refrigerant line 123 fluidly connects the components of the refrigeration unit 120.

Airflow is circulated into and through the cargo compartment of the trailer 106 by means of the refrigeration unit 120. A return airflow 134 flows into the refrigeration unit 120 from the cargo compartment of the trailer 106 through a refrigeration unit inlet 136, and across the evaporator 128 via the evaporator fan 130, thus cooling the return airflow 134 to a selected or predetermined temperature. The cooled return airflow 134, now referred to as supply airflow 138, is supplied into the cargo compartment of the trailer 106 through a refrigeration unit outlet 140, which in some embodiments is located near the top wall 108 of the trailer 106. The supply airflow 138 cools the cargo 118 in the cargo compartment of the trailer 106. It is to be appreciated that the refrigeration unit 120 can further be operated in reverse to warm the trailer 106 when, for example, the outside temperature is very low.

The refrigeration unit 120 is positioned in a frame 142 and contained in an accessible housing 144, with the frame 142 and/or the housing 144 secured to an exterior side of the front wall 114 such that the refrigeration unit 120 is positioned between the front wall 114 and the tractor 102, as shown in FIG. 1A.

The refrigeration engine 132 is operable in two modes - a first mode, such as an electric standby or electrical-drive mode (electric mode) and a second mode, such as an engine-drive mode (combustion mode). During transport of the trailer 106, the refrigeration unit 120 may be run in the second mode by operation using fuel from the tractor 102. However, during storage, such as at a facility, the refrigeration unit 120 may be operated in the first mode. During the first mode, electric power may be supplied to the refrigeration unit 120 from a facility, such as a DC or AC power supply that receives electricity from the grid, an external generator, etc. During this period, the refrigeration engine 132 is not run in order to save fuel or for other reasons. However, during operation in the first mode, the refrigeration unit 120 may be subject to vibrations due to operation of the compressor 122, due to vibrations from other equipment nearby. Similarly, the refrigeration unit 120 may be subject to vibrations when in or on a tractor trailer that is traveling on the road and may be subject to road vibrations. The vibrations experienced by the refrigeration unit 120, and refrigeration engine 132, may cause damage to the bearings of the refrigeration engine 132 due to contact with the crankshaft of the refrigeration engine 132.

It will be appreciated by those of skill in the art that the systems and configurations of FIGS. 1A and 1B are merely exemplary and provided for illustrative and descriptive purposes only. The invention is not limited thereby. For example, although a tractor trailer configuration is shown, systems may be employed in other trailer configurations, in various truck configurations, and/or in other systems and configurations.

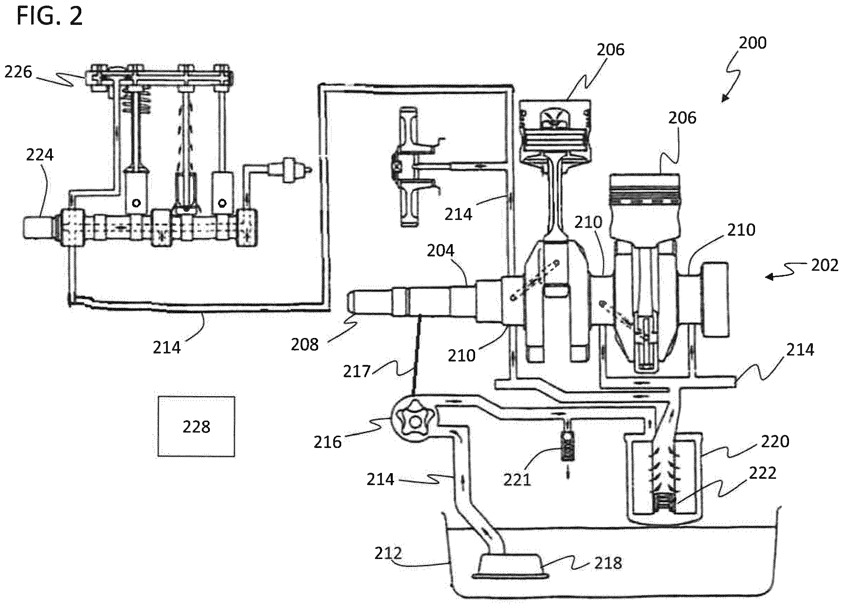

Turning now to FIG. 2, a first example of a system for protecting bearings of a refrigeration engine is shown. System 200 includes a refrigeration engine 202 having a crankshaft 204 with one or more pistons 206 operationally connected thereto. An electric starter 208 is operationally connected to the crankshaft 204 to enable the crankshaft 204 and pistons 206 to operate during the second mode, as known in the art. The crankshaft 204 is also supported by one or more bearings 210 that are configured and located as known in the art.

A lubricating fluid, such as oil or other lubricating fluids, is supplied to the bearings 210 from a lubricating fluid source 212, such as an oil pan, oil can, etc. The lubricating fluid is passed through a flow path 214 from the lubricating fluid source 212 by means of a fluid pump 216, such as a lubricating fluid pump as known in the art. The lubricating fluid is pumped and passes through a first filter 218 and a second filter 220. A relief valve 221 is located along the flow path 214 and a by-pass valve 222 is located within the second filter 220. The lubricating fluid then continues to flow through the flow path 214 to the bearings 210 to provide lubrication thereto. The lubricating fluid forms a fluid film between the bearings 210 and the crankshaft 204 to enable efficient operation of the engine 202. As shown, the flow path 214 may continue to provide lubricating fluid to a camshaft 224 and/or rocker arm 226 and/or other elements of the system 200.

When the refrigeration engine 202 is operating in the second mode, because the crankshaft 204 is operationally connected to the fluid pump 216 by means of a connector 217, the crankshaft 204 is used to rotate and operate the fluid pump 216. The fluid pump 216 thus provides lubricating fluid to the bearings 210 and other components. However, when the refrigeration unit is operating in the first mode, the pistons 206 are not operating because the crankshaft 204 is not being turned, and thus the fluid pump 216 is not operating. As a result, the lubricating fluid may flow or be pushed away from the bearings 210 and back to the lubricating fluid source 212, or at least into the flow path 214. Without the fluid film supplied by the lubricating fluid between the bearings 210 and the crankshaft 204, vibration may damage the bearings 210 and/or the crankshaft 204.

With the lubricating fluid away from the bearings 210, vibrations of the refrigeration engine during the first mode can cause fretting corrosion of the bearings 210. Bearing failure may result in replacement of the entire refrigeration engine or other high cost and/or difficult maintenance operations. As noted, when operated in the first mode, the crankshaft 204 does not rotate, but the vibrations introduced by the electric motor and compressor (see, FIG. 1B) may be transmitted to the bearings 210 and crankshaft 204. The vibrations may push out the lubricating fluid so that the lubricating fluid film between the crankshaft 204 and the bearings 210 deteriorates or diminishes with continued vibration to the point of causing fretting corrosion damage to the bearings 210 and/or crankshaft 204. The vibration damage may not occur when the engine 202 is running in the second mode and the bearings 210 are being continuously lubricated by the fluid pump 216.

It is possible to prevent damage to bearings 210 and/or crankshaft 204 by pressurizing the lubricating fluid within fluid path 214, and specifically at the bearings 210, without running the refrigeration engine 202. Operating of a fluid pump increases the lubricating fluid film thickness to separate the crankshaft 204 from surfaces of the bearings 210. In the exemplary embodiment shown in FIG. 2, the fluid pump 216, i.e., the lubricating fluid pump of the refrigeration engine, is employed. In such embodiments, the electric starter 208 can be energized to rotate the crankshaft 204, which rotates the fluid pump 216 and pressurizes the bearings 210 to create a protective film of lubricating fluid between the bearings 210 and the crankshaft 204. In the first mode, a clutch may be employed to separate operation of the refrigeration system from operation of the refrigeration engine in the first mode, so that rotation of the crankshaft does not affect operation of the refrigeration system.

A controller 228 may be configured to control the timing of engagement of the starter 208, and thus rotation of the crankshaft 204 and operation of the fluid pump 216. The controller 228 may be a computer, logic system, or other hardware and/or software configuration designed to execute programs, applications, and/or software. Thus, the controller 228 may include a processor and memory, as known in the art. The controller 228 may be configured to control the entire refrigeration unit, or may be part of a larger system of a trailer or refrigeration system. Alternatively, the controller 228 may be an independent controller that is configured to operate and control the starter 208 of the engine 202. The location and configuration of the controller is not intended to be limiting, but described for exemplary and illustrative purposes.

The controller 228 is configured to operate the starter 208 in a duty cycle. That is, a cycle of operation wherein the starter 208 is activated to turn the crankshaft 204. The duty cycle may be a function of, for example, a damaging vibration, engine design (including the lubricating fluid pump), type and/or quality of lubricating fluid, temperature, etc. As noted, a clutch (not shown) is used to isolate the rotation of the crankshaft 204 from the rest of the system so engagements of the starter 208 may occur in parallel with compressor rotation, that is, rotation of the compressor of the refrigeration unit. The controller may include or be operationally connected to a fluid pressure sensor. In this case, the duty cycle may be a function of lubricating fluid pressure within the refrigeration engine 202. Further, the controller 228 may be configured to operate the duty cycle such that the lubricating fluid pressure in the refrigeration engine 202 does not go below a predetermined or minimum measured lubricating fluid pressure and may be configured to operate the fluid pump 216 such that a maximum fluid pressure is not exceeded during the duty cycle.

The duty cycle may be a short period of operation of the fluid pump 216 followed by no operation of the fluid pump 216. That is, the starter 208 is not required to be run continuously in order to maintain sufficient fluid pressure within the system to protect the bearings 210 from vibration damage. For example, the starter 208 may be operated to turn the crankshaft 204 for a few seconds, and then stop and not operate for a few minutes. The short operation of the crankshaft 204 is adequate to operate the fluid pump 216 and increase the fluid pressure sufficiently to separate the bearings 210 from the crankshaft 204. The fluid pressure in the refrigeration engine 202 will spike or increase during the beginning of operation of the duty cycle, and then slowly decrease over time when the fluid pump is not operational. The duty cycle may be repeated to maintain a desired minimum level of fluid pressure in the system when the refrigeration engine is in the first mode.

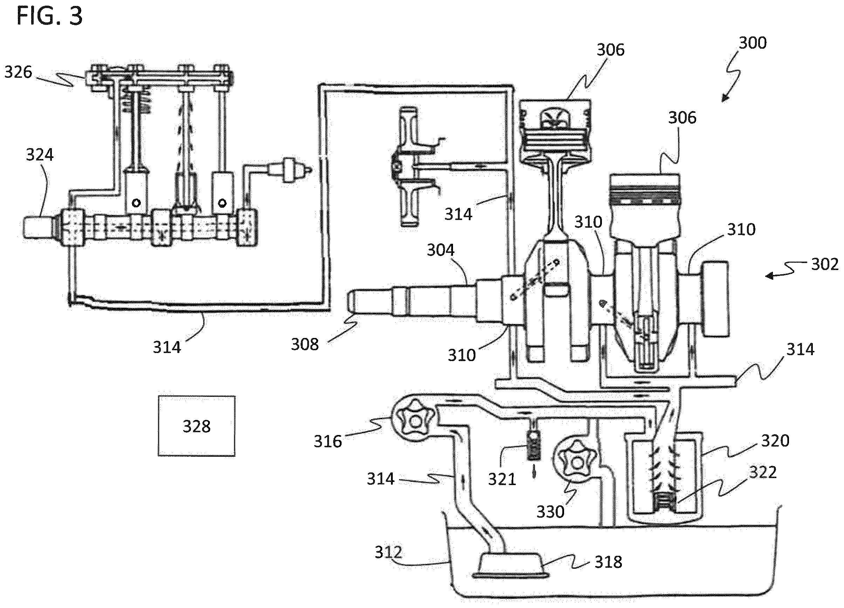

Turning now to FIG. 3, a second example of a system for protecting a refrigeration engine is shown. System 300 is substantially similar to system 200 of FIG. 2, and thus similar features are labeled with the same reference numbers, but preceded by a "3" rather than a "2." System 300 includes an engine 302 having a crankshaft 304 with one or more pistons 306 operationally connected thereto. An electric starter 308 is operationally connected to the crankshaft 304 to enable the pistons 306 to operate during the second mode, as known in the art. The crankshaft 304 also supports one or more bearings 310 that are configured and located as known in the art.

Similar to the system of FIG. 2, lubricating fluid is supplied to the bearings 310 from a lubricating fluid source 312 that is passed through a flow path 314 by means of a fluid pump 316. A first filter 318, a second filter 320, a relief valve 321, and a by-pass valve 322 are configured along the flow path 314. The lubricating fluid is supplied to the bearings 310 to provide lubrication thereto. As shown, the flow path 314 may continue to provide lubricating fluid to a camshaft 324, a rocker arm 326, and/or other elements of the system.

In the system of FIG. 3, when operating in a first mode, rather than employ the starter 308, another fluid pump 330, such as an auxiliary pump, may be employed. Thus, the bearings 310 may be supplied with lubricating fluid pressure without running the engine 302 at all, but rather only operation of an auxiliary pump 330 may be required. The auxiliary pump 330 may be an electric fluid pump.

Similar to the system of FIG. 2 a controller 328 may be configured to control the auxiliary pump 330. The auxiliary pump 330 is fluidly connected between the lubricating fluid source 312 and the bearings 310 along the flow path 314. The flow path 314 portion that connects the auxiliary pump 330 to the lubricating fluid source 312 and the rest of the flow path 314 may include one-way valves that are open only when the auxiliary pump 330 is operational. The flow path 314 that includes the auxiliary pump 330 may be fluidly isolated from the rest of the flow path 314 when the fluid pump 316 is operational, e.g. in combustion mode, and/or when the auxiliary pump 330 is not in use.

The controller 328 is configured to operate the auxiliary pump 330 in a duty cycle similar to that described above. That is, a cycle of operation wherein the auxiliary pump 330 is activated for a relatively short period of operation, followed by no operation. That is, the auxiliary pump 330 is not required to be run continuously in order to maintain sufficient fluid pressure within the system to protect the bearings 310 or crankshaft 340 from vibrational damage. The duty cycle may be repeated to maintain a desired minimum level of fluid pressure in the system.

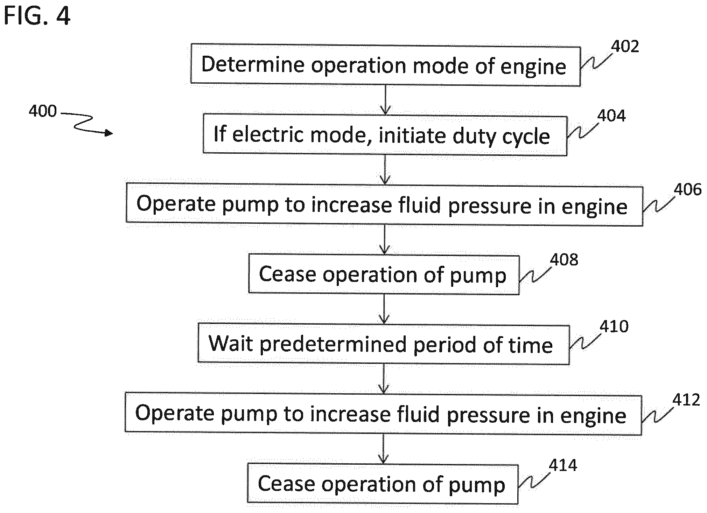

Turning to FIG. 4, a process 400 for controlling a system for protecting bearings of a refrigeration engine is shown. At step 402 a controller or other logic system or device determines the operation mode of a refrigeration engine. If the refrigeration engine is in a first mode, such as an electric standby mode or in a mode subject to road vibrations or other types of vibrations, the controller will initiate a duty cycle at step 404. It will be appreciated that step 404 may include calculations, operations, etc., during the initiation of the duty cycle. For example, the controller may take measurements, obtain information, etc. to determine the parameters of the duty cycle. For example, the controller may obtain information regarding damaging vibrations within the refrigeration engine, the engine design, the fluid pump design, the type of lubricating fluid, the quality of lubricating fluid, the temperature, the fluid pressure, etc.

The duty cycle occurs during steps 406-414. During the duty cycle operation, a fluid pump of the engine is configured to increase the fluid pressure within the refrigeration engine such that a fluid film is maintained between bearings and a crankshaft of the refrigeration engine. Thus, at step 406, the fluid pump is operated (started, activated, etc.) to increase the fluid pressure of the lubricating fluid within and throughout the refrigeration engine. At optional step 408, the pump is stopped or deactivated, and at optional step 410 the system waits a predetermined period of time. Then, at optional step 412 the pump is again operated, and stopped at optional step 414.

Steps 406-414 may be repeated during the operation of the refrigeration engine in the first mode. Thus, step 402 may be repeated periodically to determine that the refrigeration engine is still in the first mode. The controller may be configured to automatically stop, and thus cease the duty cycle, when the first mode is disabled, i.e., when the system is completely shut down or the second mode is activated.

It will be appreciated by those of skill in the art that the duty cycle of steps 406-414 may be carried out, in part, with using either of the above described fluid pump configurations or variations thereof. Thus, for example, process 400 may be used with either (i) operation of a starter of the refrigeration engine and operation of the engine lubricating fluid pump or (ii) with an auxiliary fluid pump. Thus, steps 406/412 that include operation of the pump may be operation of (i) the starter and the lubricating fluid pump of the refrigeration engine or (ii) operation of the auxiliary pump, depending on the configuration of the refrigeration engine and system. Further, it will be appreciated that the pump may be another fluid pump as known in the art and configured appropriately to increase fluid pressure between the bearings of the refrigeration engine and the crankshaft thereof.

In an example of operation, the controller may determine that the refrigeration engine is operating in the first mode. The controller will then initiate the duty cycle by sending power or instructing power to be sent to a fluid pump for operation (e.g., lubricating fluid pump, auxiliary pump, etc.). The fluid pump may then be powered and operated for a short period of time, for example two seconds. The fluid pump may then stop operating. During this operation, the fluid pressure of the lubricating fluid may be increased sufficiently to maintain a fluid film between the bearings of the refrigeration engine and the crankshaft. The controller may then wait a predetermined period of time, for example, three minutes. During this time, the fluid pressure within the system will slowly decrease, but still maintain the fluid film between the bearings and the crankshaft. After the predetermined wait time, e.g. three minutes, the pump may then be operated again to increase the fluid pressure for a period of two seconds. This is an exemplar of a duty cycle that may then be repeated during operation of the refrigeration engine in the first mode.

It is hence possible to provide a protection mechanism configured to protect bearings and/or crankshafts of a refrigeration engine, even when the refrigeration engine is not operating. Various existing solutions involve vibration isolation through dampers or shock mounts or part strengthening through bearing/crankshaft material selection. However, these solutions may be expensive and/or complex in implementation, and may even involve a redesign of the refrigeration engine and operation thereof. In contrast, in accordance with the systems described above, e.g., using the existing starter of the refrigeration engine, negligible cost may be added and may not increase the complexity of component and/or engine design. Furthermore, advantageously, such configuration may allow the frequency and duration of starter engagements (i.e., duty cycles) to be controlled through a controller and/or using software. Furthermore, advantageously, this system may be retrofittable to older units without hardware changes.

Moreover, advantageously, the use of an auxiliary pump may provide a minor hardware improvement to existing engines, and thus may be retrofittable to older units without significant changes. Furthermore, advantageously, the power supply of an auxiliary unit may be a DC or AC supplied power source that pulls directly from the grid or from another source.

Moreover, advantageously, the protective system is configured to maintain a predetermined or minimum lubricating fluid pressure within an engine such that vibration damage does not occur to the bearings and/or the crankshaft of the engine.

While the invention has been described in detail in connection with only a limited number of embodiments, it should be readily understood that the invention is not limited to such disclosed embodiments. Rather, the invention can be modified to incorporate any number of variations, alterations, substitutions, combinations, sub-combinations, or equivalent arrangements not heretofore described, but which are commensurate with the scope of the invention as defined in the claims.

For example, although two exemplary embodiments are described herein, those of skill in the art will appreciate that other configurations or arrangements are possible without departing from the scope of the invention. Furthermore, although described herein with respect to operation in the first mode and the vibrations thereof, those of skill in the art will appreciate that the above described invention may be used or operated to protect bearings of a refrigeration engine from road vibrations, or other vibrations, when the refrigeration unit is not used, such as when the trailer contains product that does not need to be refrigerated. Further, operation of the system may be employed when the system is subject to vibrations by nearby equipment or from other sources.

Further, although described herein as a cycle, those of skill in the art will appreciate that the fluid pump may be continuously operated to maintain a fluid pressure, rather than operated cyclically or periodically.

Accordingly, the invention is not to be seen as limited by the foregoing description, but is only limited by the scope of the appended claims.

## Claims

1. A system for protecting a refrigeration engine (132, 202, 302) of a refrigeration unit (120) from damage due to vibration while the refrigeration engine is not operating, the system being arranged to: operate the refrigeration unit in a first, electric, mode wherein electrical power is supplied to the refrigeration unit and the refrigeration engine is not running; and operate the refrigeration unit in a second, combustion, mode wherein the refrigeration engine is running in order to power the refrigeration unit; the system comprising:
the refrigeration engine which comprises a crankshaft (204, 304), at least one piston (206, 306), at least one bearing (210, 310), a lubricating fluid source (212, 312), and a fluid pump (216, 316, 330) associated therewith; and
a controller (228, 328) operationally connected to and configured to control the fluid pump, wherein, when the system is in the first, electric, mode, the controller is configured to control the fluid pump in a duty cycle to maintain a predetermined minimum fluid pressure of the lubricating fluid such that a lubricating fluid film is present between the at least one bearing and the crankshaft while the refrigeration engine is not operating.

2. The system of claim 1, comprising a starter (208, 308) operationally connected to the crankshaft (204, 304) and the fluid pump (216, 316),
wherein the starter is configured to supply power to and operate the fluid pump, and
wherein the controller (228, 328) is configured to operate the starter when the system is in the first mode to operate the fluid pump and maintain the lubricating fluid film while the refrigeration engine (132, 202, 302) is not operating.

3. The system of claim 1, wherein the fluid pump is an auxiliary pump (330), the refrigeration engine (302) further comprising a lubricating fluid pump (316).

4. The system of claim 3, wherein the auxiliary pump (330) is fluidly isolated from the at least one bearing (210, 310) when the system is in the second mode.

5. The system of any of claims 3-4, wherein the auxiliary pump (330) is fluidly connected to the at least one bearing (210, 310) when the system is in the first mode.

6. The system of any of claims 3-5, wherein the auxiliary pump (330) is configured to be powered by an electric power source.

7. The system of any of claims 3 to 6, wherein the controller (328) is configured to control the auxiliary pump (330) to operate in the duty cycle to maintain the lubricating fluid film while the refrigeration engine (302) is not operating.

8. The system of any of the preceding claims, wherein the controller (228, 328) is configured to determine at least one characteristic of the duty cycle of the fluid pump (216, 316, 330) based on at least one of an engine mode, a damaging vibration, an engine design, a fluid pump design, a type of lubricating fluid, a quality of lubricating fluid, a temperature, and a fluid pressure.

9. The system of any of the preceding claims, wherein the refrigeration engine (132, 202, 302) is an internal combustion engine of the refrigeration unit (120).

10. The system of any of the preceding claims, wherein the controller (228, 328) is configured to provide the lubricating fluid to one or more additional components of the refrigeration engine (132, 202, 302) when in the first mode.

11. A method of protecting a refrigeration engine (132, 202, 302) of a refrigeration unit (120) from vibration damage using a system arranged to: operate the refrigeration unit in a first, electric, mode wherein electrical power is supplied to the refrigeration unit and the refrigeration engine is not running; and operate the refrigeration unit in a second, combustion, mode wherein the refrigeration engine is running in order to power the refrigeration unit; the refrigeration engine having at least one bearing (210, 310) and a crankshaft (204, 304), the method comprising:
determining that the system is operating in the first mode; and
operating, in the first mode, a fluid pump (216, 316, 330) in a duty cycle to maintain a bearing lubrication fluid film between the at least one bearing and the crankshaft while the refrigeration engine is not operating.

12. The method of claim 11, wherein the refrigeration engine (132, 202, 302) includes a starter (208, 308), the method further comprising:
controlling the starter to operate the fluid pump (216, 316) during the duty cycle.

13. The method of claim 11, wherein the fluid pump is an auxiliary pump (330) and the refrigeration engine (302) further comprises a lubricating fluid pump (316).

## Patentansprüche

1. System zum Schutz eines Kühlmotors (132, 202, 302) einer Kühleinheit (120) vor einer Beschädigung aufgrund einer Schwingung während der Kühlmotor nicht arbeitet, wobei das System zu Folgendem ausgelegt ist: Betreiben der Kühleinheit in einem ersten, elektrischen Modus, wobei eine elektrische Leistung an die Kühleinheit geliefert wird und der Kühlmotor nicht läuft; und Betreiben der Kühleinheit in einem zweiten Verbrennungsmodus, wobei der Kühlmotor läuft, um die Kühleinheit anzutreiben; wobei das System Folgendes umfasst:
den Kühlmotor, der eine Kurbelwelle (204, 304), mindestens einen Kolben (206, 306), mindestens ein Lager (210, 310), eine Schmierfluidquelle (212, 312) und eine damit assoziierte Fluidpumpe (216, 316, 330) umfasst; und
eine Steuerung (228, 328), die operativ mit der Fluidpumpe verbunden und dazu konfiguriert ist, diese zu steuern,
wobei die Steuerung, wenn sich das System in dem ersten, elektrischen Modus befindet, dazu konfiguriert ist, die Fluidpumpe in einem Arbeitszyklus zu steuern, um einen vorbestimmten Mindestfluiddruck des Schmierfluids aufrechtzuerhalten, sodass ein Schmierfluidfilm zwischen dem mindestens einen Lager und der Kurbelwelle vorhanden ist, während der Kühlmotor nicht arbeitet.

2. System nach Anspruch 1, das einen Anlasser (208, 308) umfasst, der operativ mit der Kurbelwelle (204, 304) und der Fluidpumpe (216, 316) verbunden ist,
wobei der Anlasser dazu konfiguriert ist, eine Leistung an die Fluidpumpe zu liefern und diese zu betreiben, und
wobei die Steuerung (228, 328) dazu konfiguriert ist, den Anlasser zu betreiben, wenn das System sich in dem ersten Modus befindet, um die Fluidpumpe zu betreiben und den Schmierfluidfilm aufrechtzuerhalten, während der Kühlmotor (132, 202, 302) nicht arbeitet.

3. System nach Anspruch 1, wobei die Fluidpumpe eine Hilfspumpe (330) ist, wobei der Kühlmotor (302) ferner eine Schmierfluidpumpe (316) umfasst.

4. System nach Anspruch 3, wobei die Hilfspumpe (330) fluidisch von dem mindestens einen Lager (210, 310) isoliert ist, wenn das System sich in dem zweiten Modus befindet.

5. System nach einem der Ansprüche 3-4, wobei die Hilfspumpe (330) fluidisch mit dem mindestens einen Lager (210, 310) verbunden ist, wenn das System sich in dem ersten Modus befindet.

6. System nach einem der Ansprüche 3-5, wobei die Hilfspumpe (330) dazu konfiguriert ist, durch eine elektrische Leistungsquelle angetrieben zu werden.

7. System nach einem der Ansprüche 3 bis 6, wobei die Steuerung (328) dazu konfiguriert ist, die Hilfspumpe (330) dazu zu steuern, in dem Arbeitszyklus zu arbeiten, um den Schmierfluidfilm aufrechtzuerhalten, während der Kühlmotor (302) nicht arbeitet.

8. System nach einem der vorhergehenden Ansprüche, wobei die Steuerung (228, 328) dazu konfiguriert ist, mindestens ein Merkmal des Arbeitszyklus der Fluidpumpe (216, 316, 330) auf der Basis von mindestens einem von einem Motormodus, einer beschädigenden Schwingung, einer Motorkonstruktion, einer Fluidpumpenkonstruktion, einer Art von Schmierfluid, einer Qualität des Schmierfluids, einer Temperatur und einem Fluiddruck zu bestimmen.

9. System nach einem der vorhergehenden Ansprüche, wobei der Kühlmotor (132, 202, 302) ein Verbrennungsmotor der Kühleinheit (120) ist.

10. System nach einem der vorhergehenden Ansprüche, wobei die Steuerung (228, 328) dazu konfiguriert ist, das Schmierfluid in dem ersten Modus an eine oder mehrere zusätzliche Komponenten des Kühlmotors (132, 202, 302) bereitzustellen.

11. Verfahren zum Schützen eines Kühlmotors (132, 202, 302) einer Kühleinheit (120) vor einer Beschädigung aufgrund einer Schwingung unter Verwenden eines Systems, das zu Folgendem ausgelegt ist: Betreiben der Kühleinheit in einem ersten, elektrischen Modus, wobei eine elektrische Leistung an die Kühleinheit geliefert wird und der Kühlmotor nicht läuft; und Betreiben der Kühleinheit in einem zweiten Verbrennungsmodus, wobei der Kühlmotor läuft, um die Kühleinheit anzutreiben; wobei der Kühlmotor mindestens ein Lager (210, 310) und eine Kurbelwelle (204, 304) aufweist, wobei das Verfahren Folgendes umfasst:
Bestimmen, dass das System in dem ersten Modus arbeitet; und
Betreiben einer Fluidpumpe (216, 316, 330) in einem Arbeitszyklus in dem ersten Modus, um einen Schmierfluidfilm zwischen dem mindestens einen Lager und der Kurbelwelle aufrechtzuerhalten, währen der Kühlmotor nicht arbeitet.

12. Verfahren nach Anspruch 11, wobei der Kühlmotor (132, 202, 302) einen Anlasser (208, 308) einschließt, wobei das Verfahren ferner Folgendes umfasst:
Steuern des Anlassers dazu, die Fluidpumpe (216, 316) während des Arbeitszyklus zu betreiben.

13. Verfahren nach Anspruch 11, wobei die Fluidpumpe eine Hilfspumpe (330) ist und der Kühlmotor (302) ferner eine Schmierfluidpumpe (316) umfasst.

## Revendications

1. Système pour protéger un moteur de réfrigération (132, 202, 302) d'une unité de réfrigération (120) d'un endommagement dû aux vibrations alors que le moteur de réfrigération n'est pas en fonctionnement, le système étant conçu pour : faire fonctionner l'unité de réfrigération dans un premier mode électrique, dans lequel une alimentation électrique est fournie à l'unité de réfrigération et le moteur de réfrigération n'est pas en marche ; et faire fonctionner l'unité de réfrigération dans un second mode de combustion, dans lequel le moteur de réfrigération est en marche afin d'alimenter l'unité de réfrigération ; le système comprenant :
le moteur de réfrigération qui comprend un vilebrequin (204, 304), au moins un piston (206, 306), au moins un palier (210, 310), une source de fluide de lubrification (212, 312) et une pompe à fluide (216, 316, 330) associée à celui-ci ; et
un dispositif de commande (228, 328) relié de manière opérationnelle à la pompe à fluide et conçu pour la commander, dans lequel, lorsque le système est dans le premier mode électrique, le dispositif de commande est conçu pour commander la pompe à fluide dans un cycle de service pour maintenir une pression de fluide minimale prédéterminée du fluide de lubrification de telle sorte qu'un film de fluide de lubrification est présent entre l'au moins un palier et le vilebrequin alors que le moteur de réfrigération n'est pas en fonctionnement.

2. Système selon la revendication 1, comprenant un démarreur (208, 308) relié de manière opérationnelle au vilebrequin (204, 304) et à la pompe à fluide (216, 316),
dans lequel le démarreur est conçu pour fournir de l'électricité à la pompe à fluide et pour la faire fonctionner, et
dans lequel le dispositif de commande (228, 328) est conçu pour faire fonctionner le démarreur lorsque le système est dans le premier mode pour faire fonctionner la pompe à fluide et maintenir le film de fluide de lubrification alors que le moteur de réfrigération (132, 202, 302) n'est pas en fonctionnement.

3. Système selon la revendication 1, dans lequel la pompe à fluide est une pompe auxiliaire (330), le moteur de réfrigération (302) comprenant en outre une pompe à fluide de lubrification (316).

4. Système selon la revendication 3, dans lequel la pompe auxiliaire (330) est isolée fluidiquement de l'au moins un palier (210, 310) lorsque le système est dans le second mode.

5. Système selon l'une quelconque des revendications 3 et 4, dans lequel la pompe auxiliaire (330) est reliée fluidiquement à l'au moins un palier (210, 310) lorsque le système est dans le premier mode.

6. Système selon l'une quelconque des revendications 3 à 5, dans lequel la pompe auxiliaire (330) est conçue pour être alimentée par une source d'alimentation électrique.

7. Système selon l'une quelconque des revendications 3 à 6, dans lequel le dispositif de commande (328) est conçu pour commander le fonctionnement de la pompe auxiliaire (330) dans le cycle de service pour maintenir le film de fluide de lubrification alors que le moteur de réfrigération (302) n'est pas en fonctionnement.

8. Système selon l'une quelconque des revendications précédentes, dans lequel le dispositif de commande (228, 328) est conçu pour déterminer au moins une caractéristique du cycle de service de la pompe à fluide (216, 316, 330) sur la base d'au moins l'un d'un mode moteur, d'une vibration d'endommagement, d'un modèle de moteur, d'un modèle de pompe à fluide, d'un type de fluide de lubrification, d'une qualité de fluide de lubrification, d'une température et d'une pression de fluide.

9. Système selon l'une quelconque des revendications précédentes, dans lequel le moteur de réfrigération (132, 202, 302) est un moteur à combustion interne de l'unité de réfrigération (120).

10. Système selon l'une quelconque des revendications précédentes, dans lequel le dispositif de commande (228, 328) est conçu pour fournir le fluide de lubrification à un ou plusieurs composants supplémentaires du moteur de réfrigération (132, 202, 302) lorsqu'il est dans le premier mode.

11. Procédé de protection d'un moteur de réfrigération (132, 202, 302) d'une unité de réfrigération (120) d'un endommagement par vibration à l'aide d'un système conçu pour :
faire fonctionner l'unité de réfrigération dans un premier mode électrique, dans lequel une alimentation électrique est fournie à l'unité de réfrigération et le moteur de réfrigération n'est pas en fonctionnement ; et faire fonctionner l'unité de réfrigération dans un second mode de combustion dans lequel le moteur de réfrigération est en marche afin d'alimenter l'unité de réfrigération ; le moteur de réfrigération comportant au moins un palier (210, 310) et un vilebrequin (204, 304), le procédé comprenant :
la détermination du fait que le système est en fonctionnement dans le premier mode ; et
la mise en fonctionnement, dans le premier mode, d'une pompe à fluide (216, 316, 330) dans un cycle de service pour maintenir un film de fluide de lubrification de palier entre l'au moins un palier et le vilebrequin alors que le moteur de réfrigération n'est pas en fonctionnement.

12. Procédé selon la revendication 11, dans lequel le moteur de réfrigération (132, 202, 302) inclut un démarreur (208, 308), le procédé comprenant en outre :
la commande du démarreur pour faire fonctionner la pompe à fluide (216, 316) au cours du cycle de service.

13. Procédé selon la revendication 11, dans lequel la pompe à fluide est une pompe auxiliaire (330) et le moteur de réfrigération (302) comprend en outre une pompe à fluide de lubrification (316).
